# EUROPEAN PATENT SPECIFICATION

(11) **EP 0 593 106 B1**
(45) Date of publication and mention of the grant of the patent: **05.03.1997**
(21) Application number: 93202533.1
(22) Date of filing: 31.08.1993
(51) Int. Cl.: E05D 7/10, E05D 11/00, H02B 1/16, H02B 1/38

(54) **A concealed hinge for a distribution board panel**
Ein verdeckt angeordnetes Scharnier für ein Paneel einer Schalttafel
Une charnière câchée pour un panneau d'un tableau de distribution

(30) Priority: 16.10.1992 IT MI922383
(43) Date of publication of application: 20.04.1994
(73) Proprietor: BTICINO S.P.A., 20154 Milano (IT)
(72) Inventor: Boffelli, Roberto, I-24030 Mozzo (Bergamo) (IT); Fontana, Rodolfo, I-21100 Varese (IT)
(74) Representative: Maggioni, Claudio

(56) References cited:
- DE-A- 2 642 176
- DE-B- 1 052 662
- US-A- 3 431 590
- US-A- 3 439 377
- US-A- 3 928 890
- US-A- 3 952 369
- US-A- 4 962 567

## Description

The present invention relates to a hinge according to the preamble of appended claim 1. Such a hinge is known in the art from US-A-3 439 377.

In the present description, and in the appended claims, the term distribution board should be understood to mean those units which are generally used in electrical installations, either for civil buildings, or for industrial purposes or others, to contain the instruments required to ensure the constant and safe operation of the installation; these instruments may include various types of control or safety switches, fuses, terminal boards and the like.

Distribution boards are generally arranged in case structures, positioned either on the floor or on a wall, with dimensions varying from case to case according to the type of electrical installation. In addition, such structures must be accessible from outside so that users may use the instruments contained therein; this is made possible thanks to the provision of suitable removable panels.

As these panels must be removable, it is necessary for them to be fixed to the rest of the box structure with appropriate fixing means. Since the box structures mentioned so far are generally modular and can be assembled together, so that they can be constructed to fit the dimensions of any distribution board that is to be installed, such a constructional arrangement can only be achieved by using components of standard dimensions, which are therefore interchangeable and easy to fit together in a stable manner.

The removable panels of the structures must therefore comply with the same constructional requirements of the box structures themselves. In practice, this means that the most commonly used removable fixing means for the panels are screws which provide an easy solution which is also appropriate for any panel. However, among the various models of structures for containing distribution boards there is also a demand for cases with hinged panels that may be opened like doors, without having to remove a series of fixing screws; this is the case where the correct operation of the electrical system requires frequent operation of the distribution board and it is therefore necessary to be able easily to open and close the container structure thereof.

In order to comply with this requirement, special hinged panels are manufactured; however this arrangement makes it necessary to manufacture two types of panel: the hinged panels and the more simple panels to be fixed with screws; this leads to an increase in costs and limits standardisation in the manufacture of the structures. It is sufficient here to remember the great variety of distribution boards on the market today: from boards contained in box structures with hinged panels incorporating a window for swift inspection of the instruments, to boards that must be particularly fluid-tight for use in environments exposed to water. The need to manufacture and stock a double supply of panels, with and without hinges, is clearly a burden which is difficult to avoid.

The object of the present invention is to devise and provide a hinge for panels for use in the case structures for distribution boards which overcomes the disadvantages described above with reference to the prior art.

This object is achieved, according to the invention, by a hinge characterised in the claims which follow.

Further characteristics and the advantages of the present invention will become apparent from the following description of one embodiment, given purely by way of non-limitative example, with reference to the appended drawings, in which:
Figure 1 is a perspective view of a case structure for containing a distribution board, made in accordance with the present invention;
Figure 2 is a perspective view, with the components disassembled, of a detail of the structure of Figure 1; and
Figures 3 and 4 are cross-sections of a hinge according to the invention in different operating conditions.

With reference to the above drawings, a general case structure for an electrical distribution board, generally indicated S, includes a panel 1 frontally mounted on a plurality of side walls 2. In particular, the panel 1 is fixed to one of the side walls 2 by means of a pair of hinges 3 according to the invention.

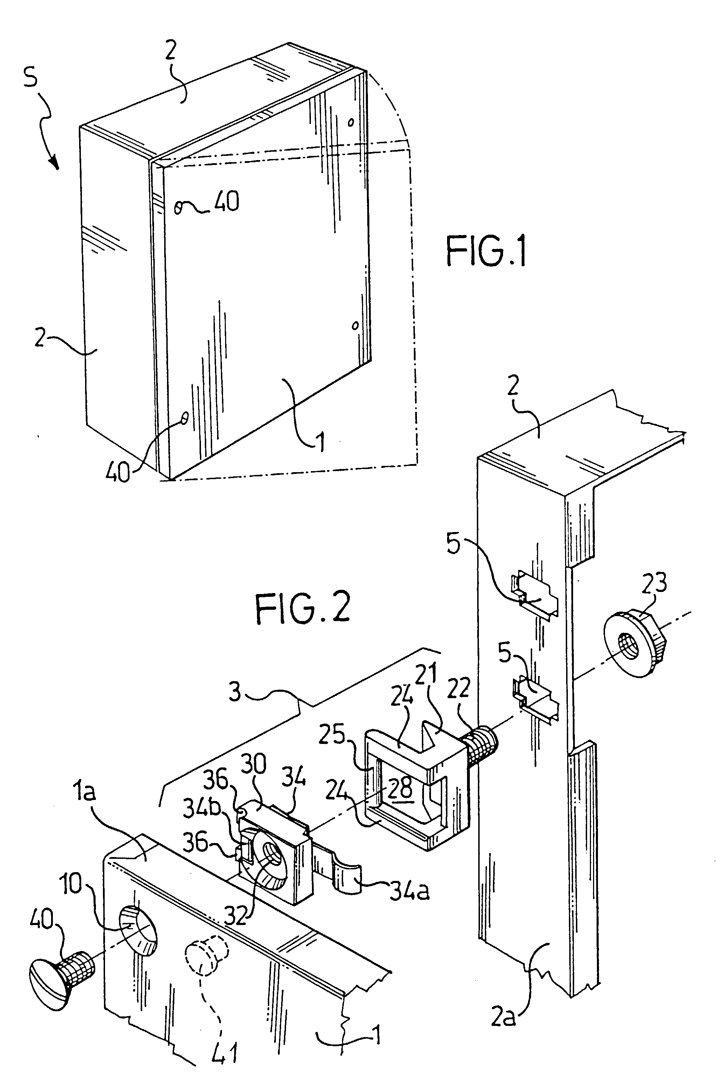

With reference to Figure 2, the hinges 3 are mounted on a front portion 2a, defined in this case by the thickness of the said wall 2, which faces the panel 1 and has a plurality of apertures 5.

The panel 1 is quadrangular, of the type having a raised edge 1a, operable to abut against the side walls 2 which make up the case structure S. In addition, the panel 1 has bores 10 at its four corners; these (see Figures 1 and 2) are each such as to coincide, when the panel itself is applied to the front of the case structure, with a corresponding aperture 5 provided on the said portions 2a of the walls 2. Each hinge 3 includes a base 21 with a threaded stem 22 which extends through the corresponding aperture 5 and is fixed to the corresponding portion 2a of the wall 2 by a nut 23.

From an opposite side of the base 21 with respect to the stem 22, project two parallel, cranked arms 24 which support a pin 25 extending between them.

The two arms 24, the pin 25 and the base 21 define an open seat 28 for engaging a plate-like insert 30. In a preferred embodiment, this latter has a central threaded bore 32 passing right through its thickness, and a lamina 34 of electrically conductive material.

In particular, referring to this last point, in the present example the lamina 34 extends from a first curved end 34a which projects from the insert 30, to a second end 34b which will be described in greater detail later. The insert has two supports 36 constituted by corresponding recesses formed in the insert symmetrically with respect to the lamina 34 and provided for engagement by the pin 25 when a screw 40 passing through the bore 10 in the panel 1 is inserted into the threaded hole 32 of the insert 30; the end 34b of the lamina 34 is interposed between said supports and is in slidable contact with the pin 25 when the insert 30 is engaged in the seat 28.

The assembly of the hinge according to the invention provides for the insert 30 to be engaged in the seat 28 so as to keep the curved end 34a of the lamina 34 projecting outward from said seat and in contact with a block 41 of conductive material fixed to the panel 1. The screw 40 connects the insert 30, arranged in its seat 28, to the panel 1 and maintains said supports 36 pivotably coupled to the pin 25; this latter is fixed, together with the base 21 of the hinge, to the wall 2 by the nut 23 which is engaged by the threaded stem 22. It should be noted that, advantageously, in the thus-assembled hinge, the edge 1a of the panel forms a side buffer element for the insert 30; in fact, it prevents movements that could lead to the supports 36 becoming detached from the pin 25, in a direction perpendicular to the latter and in the opposite direction from that in which the insert 30 is inserted into the seat 28.

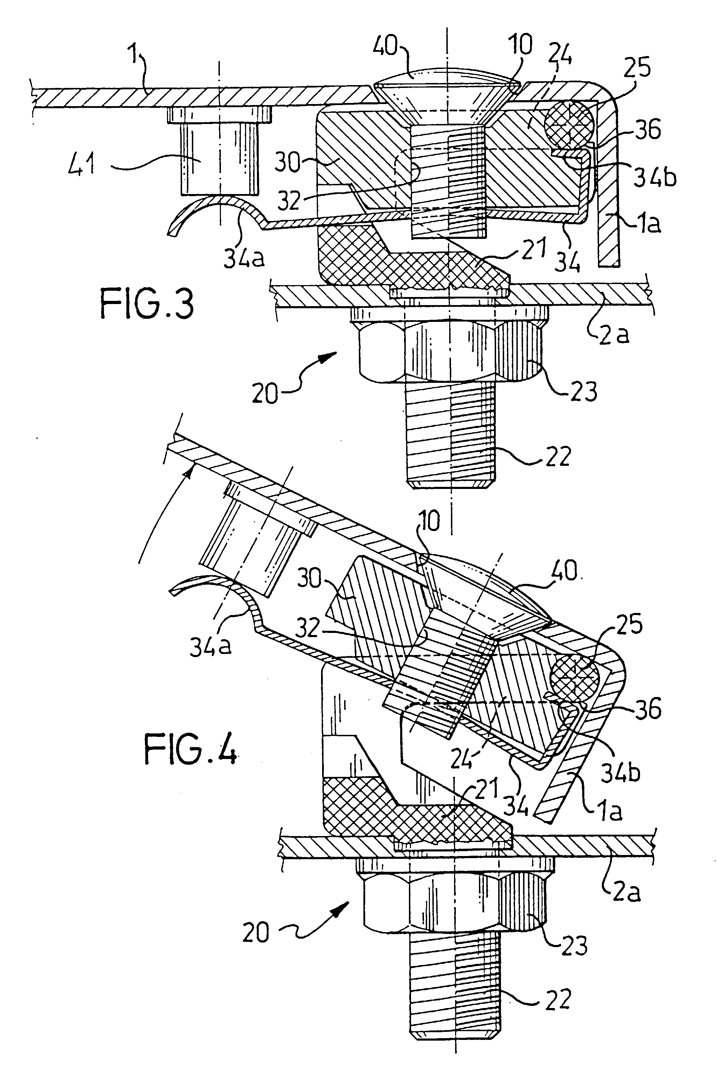

With reference in particular to Figures 3 and 4, it is easy to see how, thanks to the hinge according to the invention, the panel 1 of the case structure S is opened like a normal hinged door: in fact the plate-like insert 30 is securely fixed to the panel 1 by the screw 40 so that it can pivot about the pin 25, to which it is fixed at the supports 36; this coupling allows the insert to assist the opening movement of the panel 1.

It is also important to point out that the hinge according to the invention enables a single panel to be used for both requirements described above, that is in the case of a simple panel fixed by screws or in the case of a panel to be mounted on hinges. It is clear, in fact, that if the panel 1 is to be mounted on the case structure S without the previously illustrated hinges, it is ready, as it needs only to be fixed to the portions 2a of the walls 2 by a simple screw through the juxtaposed apertures 5 and bores 10 respectively and secured with a nut, in a similar manner to that described for the threaded stem 22. On this subject, it should be pointed out that, in the example above referred to, the panel 1 has four bores 10 arranged at its four corners and to which correspond the same number of apertures 5 in the walls 2 of the structure S; as two pairs of corresponding apertures 5 and bores 10 may be engaged by the hinges 3, the other two pairs may be used as closing elements, by way of locks, for example by inserting two through-screws or the like. Naturally, the panel could be made with a number of bores other than four and with different dimensions from those defined by the said walls 2; it is in fact possible to imagine fitting more than one panel on the said walls to close the case structure.

It should also be noted that the panel 1 requires no modification, even from an aesthetic point of view, to permit the application of the hinge according to the invention, as this latter is completely concealed in the assembled container structure S. In addition, as far as safety is concerned, it should be noted how the lamina 34 and its ends 34a, 34b maintain the panel 1 and the wall 2 of the box structure on which the former is mounted in constant electrical contact, thus ensuring that all the requirements of safety regulations are met. On this subject, it is useful to point out that safety regulations relating to electrical systems require that structures for containing distribution boards should be grounded if they are made of metal, or in any event are electrically conductive, especially any closure panels with which they are provided; prior art panels are generally grounded by means of a wire of conductive material with one end fixed to the case structure and the other to the panel. Each time the panel is removed by a user for access to the distribution board, it remains suspended by the wire if it is of the type fixed by screws or, if it is hinged the wire itself may obstruct any operations to be performed on the board; from this it is evident that the hinge according to the invention is an arrangement which is also able to make a useful contribution to the safety and convenience of case structures for distribution boards. Finally, the possibility of making a few changes to the embodiment as described should not be excluded; it would be possible, for example, to removably fix the base 21 and the insert 30 to the portion 2a of the panel 2 and to the panel 1 respectively by means other than the threaded ones described above. In addition, the pivotable coupling of the insert 30 and the base 21, achieved by means of the pin 25 supported by arms 24 and coupled to the supports 36, could be achieved with the use of construction means which are substantially similar but differently shaped.

## Claims

1. A hinge for fixing a closure panel (1) of a case structure (S) for a distribution board to a wall (2) of said case structure (S), in such a way that the panel (1) may be opened, comprising:
- a base (21) with first fixing means (22) making it fitted to be removably fixed to said wall (2), and from which base (21) a pair of substantially cranked arms (24) extend supporting a pin (25) between them,
- a plate-like insert (30) with second fixing means (32) making it fitted to be removably fixed to said panel (1), said arms (24), pin (25) and base (21) substantially defining a seat (28) for receiving said plate like insert (30), said plate-like insert (30) being able to pivot about said pin (25),
characterised in that the first (22) and second (32) fixing means are aligned when the panel (1) is in the closed condition such as to allow them to cooperate respectively with a bore (10) on the panel (1) and with an aperture (5) on the wall (2), whereby the bore (10) and the aperture (5) are such as to coincide when the panel (1) itself is applied to the front of the case structure.

2. A hinge according to claim 1, wherein the first fixing means comprises a threaded stem (22) extending on the side of the base (21) opposite to that from which the cranked arms (24) extend, for engagement with the aperture (5) on the wall (2) of the case structure.

3. A hinge according to claim 1 or 2, wherein said second fixing means of the plate-like insert (30) is a threaded bore (32) for engagement with a screw (40) to be passed through the bore (10) on the panel (1).

4. A hinge according to any of claims 1,2 or 3, wherein said plate-like insert (30) is provided with a lamina (34) having a first end (34a) which is in electrical contact with the panel (1) when the insert (30) is fixed to the panel, and a second end (34b) which is in contact with said pin (25) when the insert (30) is engaged in the said seat (28).

5. A hinge according to Claim 4, wherein said plate-like insert (30) is provided with a pair of supports (36), formed by corresponding recesses in a side of the insert itself and providing a pivotable coupling with said pin (25), the second end (34b) of the lamina (34) being interposed between said recesses, in sliding contact with the pin (25).

6. A case structure (S) comprising a closure panel (1) and a hinge according to any of claims 1 to 5, the panel (1) being fixed to a wall (2) of the structure (S) by means of the hinge, characterised in that said panel (1) is provided with a raised edge (1a) forming a buffer for said plate-like insert (30) when it is engaged in the seat (28) and removably fixed to the panel (1).

## Patentansprüche

1. Scharnier, mit dem eine Verschlußplatte (1) einer Gehäusestruktur (S) für eine Verteilerplatte (2) so an einer Wand der Gehäusestruktur (S) befestigt werden kann, daß sich die Platte (1) öffnen läßt, das umfaßt:
- einen Fuß (21) mit einer ersten Befestigungseinrichtung (22), durch die er sich zur lösbaren Befestigung an der Wand (2) eignet, wobei sich von dem Fuß (21) ein Paar im wesentlichen gekröpfter Arme (24) erstreckt, die einen Stift (25) dazwischen tragen.
- einen plattenartigen Einsatz (30) mit einer zweiten Befestigungseinrichtung (32), durch die er sich zur lösbaren Befestigung an der Platte (1) eignet, wobei die Arme (24), der Stift (25) und der Fuß (21) im wesentlichen eine Aufnahme (28) bilden, die den plattenartigen Einsatz (30) aufnimmt, wobei sich der plattenartige Einsatz (30) um den Stift (25) herumdrehen kann,
**dadurch gekennzeichnet,** daß die erste (22) und die zweite (32) Befestigungseinrichtung zueinander fluchtend sind, wenn sich die Platte (1) in geschlossenem Zustand befindet, so daß sie mit einer Bohrung (10) an der Platte (1) und einer Öffnung (5) an der Wand (2) zusammenwirken können, wobei die Bohrung (10) und die Öffnung (5) so sind, daß sie zusammenfallen, wenn die Platte (1) an der Vorderseite der Gehäusestruktur anliegt.

2. Scharnier nach Anspruch 1, wobei die erste Befestigungseinrichtung einen mit Gewinde versehenen Schaft (22) umfaßt, der sich auf der Seite des Fußes (21) gegenüber der erstreckt, von der aus sich die gekröpften Arme (24) erstrecken, um mit der Öffnung (5) an der Wand (2) der Gehäusestruktur in Eingriff zu kommen.

3. Scharnier nach Anspruch 1 oder 2, wobei die zweite Befestigungseinrichtung des plattenartigen Einsatzes (30) eine Gewindebohrung (32) ist, die mit einer Schraube (40) in Eingriff kommt, die durch die Bohrung (10) an der Platte (1) hindurchgeführt wird.

4. Scharnier nach einem der Ansprüche 1, 2 oder 3, wobei der plattenartige Einsatz (30) mit einem Plättchen (34) versehen ist, das ein erstes Ende (34a) hat, das in elektrischem Kontakt mit der Platte (1) ist, wenn der Einsatz (30) an der Platte befestigt ist, und ein zweites Ende (34b), das in Kontakt mit dem Stift (25) ist, wenn der Einsatz (30) in die Aufnahme (28) eingreift.

5. Scharnier nach Anspruch 4, wobei der plattenartige Einsatz (30) mit einem Paar Halterungen (36) versehen ist, die durch entsprechende Aussparungen an einer Seite des Einsatzes selbst gebildet werden und eine Schwenkkupplung mit den Stift (25) bilden, wobei das zweite Ende (34b) des Plättchen (34), das sich zwischen den Aussparungen befindet, in Gleitkontakt mit dem Zapfen ist.

6. Gehäusestruktur (S), die eine Verschlußplatte (1) und ein Scharnier nach einem der Ansprüche 1 bis 5 umfaßt, wobei die Platte (1) mit dem Scharnier an einer Wand (2) der Struktur (S) befestigt ist, **dadurch gekennzeichnet**, daß die Platte (1) mit einer erhabenen Kante (1a) versehen ist, die einen Anschlag für den plattenartigen Einsatz (30) bildet, wenn er in die Aufnahme (28) eingreift und lösbar an der Platte (1) befestigt ist.

## Revendications

1. Charnière pour fixer un panneau de fermeture (1) d'une structure (S) de boîtier pour un tableau de distribution sur une paroi (2) de cette structure (S) de boîtier, de telle manière que le panneau (1) puisse être ouvert, comprenant :
- une base (21) munie de premiers moyens de fixation (22) permettant l'ajustement de cette base de manière à être fixée de façon amovible à la paroi (2), et une paire de bras (24) sensiblement coudés s'étendant à partir de la base (21), ces bras (24) portant une broche (25) entre eux,
- un insert (30) en forme de plaque muni de seconds moyens de fixation (32) permettant d'ajuster cet insert de manière à être fixé de façon amovible au panneau (1), les bras (24), la broche (25) et la base (21) définissant sensiblement un siège (28) pour recevoir l'insert (30) en forme de plaque, l'insert (30) en forme de plaque étant capable de pivoter autour de la broche (25),
caractérisée en ce que les premiers (22) et seconds (32) moyens de fixation sont alignés lorsque le panneau (1) est dans une configuration fermée de manière à permettre à ces moyens de fixation de coopérer respectivement avec un alésage (10) ménagé dans le panneau (1) et avec une ouverture (5) ménagée dans la paroi (2), de manière que l'alésage (10) et l'ouverture (5) soient tels qu'ils coïncident lorsque le panneau (1) lui-même est appliqué sur le devant de la structure de boîtier.

2. Charnière selon la revendication 1, dans laquelle les premiers moyens de fixation comprennent une tige filetée (22) s'étendant sur le côté de la base (21) opposée à celui à partir duquel s'étendent les bras coudés (24), pour coopérer avec l'ouverture (5) et la paroi (22) de la structure de boîtier.

3. Charnière selon la revendication 1 ou 2, dans laquelle les seconds moyens de fixation de l'insert (30) en forme de plaque sont un alésage taraudé (32) destiné à coopérer avec une vis (40) destinée à passer à travers l'alésage (10) du panneau (1).

4. Charnière selon l'une quelconque des revendications 1,2 ou 3, dans laquelle l'insert (30) en forme de plaque est muni d'une lame (34) comportant une première extrémité (34a) qui est en contact électrique avec le panneau (1) lorsque l'insert (30) est fixé au panneau, et une seconde extrémité (34b) qui est en contact avec la broche (25) lorsque l'insert (30) coopère avec le siège (28).

5. Charnière selon la revendication 4, dans laquelle l'insert (30) formant plaque est muni d'une paire de supports (36), formés par des enfoncements correspondants ménagés dans un côté de l'insert lui-même et fournissant un accouplement pivotant avec la broche (25), la seconde extrémité (34b) de la lame (34) étant interposée entre les enfoncements, en contact glissant avec la broche (25).

6. Structure de boîtier (S) comprenant un panneau (1) et une charnière selon l'une quelconque des revendications 1 à 5, le panneau (1) étant fixé à une paroi (2) de la structure (S) au moyen de la charnière, caractérisée en ce que le panneau (1) est muni d'un bord dressé (1a) formant un butoir pour l'insert (30) en forme de plaque lorsqu'il coopère avec le siège (28) et est fixé de façon amovible sur le panneau (1).
